# EUROPÄISCHE PATENTSCHRIFT

(11) **EP 2 636 602 B1**
(45) Veröffentlichungstag und Bekanntmachung des Hinweises auf die Patenterteilung: **16.04.2014**
(21) Anmeldenummer: 12006378.9
(22) Anmeldetag: 11.09.2012
(51) Int. Cl.: B64G 1/40, F17C 7/00, F02K 9/60, F15B 1/12, F17C 13/00, F17C 1/00

(54) **Treibstofftank**
Fuel tank
Réservoir de carburant

(30) Priorität: 27.10.2011 DE 102011117489
(43) Veröffentlichungstag der Anmeldung: 11.09.2013
(73) Patentinhaber: Astrium GmbH, 82024 Taufkirchen (DE)
(72) Erfinder: Schwarting, Walter, 26127 Oldenburg (DE); Goëk, Sylvain, 28357 Bremen (DE)
(74) Vertreter: Hansmann, Dierk

(56) Entgegenhaltungen:
- EP-A2- 1 031 729
- DE-A1- 2 102 969
- DE-A1- 4 243 652
- DE-A1-102007 003 724
- DE-C1- 19 810 638
- FR-A5- 2 092 208
- GB-A- 702 518

## Beschreibung

Die Erfindung betrifft einen Treibstofftank für die Lagerung von Flüssigkeiten, die durch ein Druckgas aus dem Tank ausgetrieben werden, insbesondere für den Einsatz in Raumfahrzeugen, der als Membran-Tank aufgebaut ist und bei dem die Membran aus einem Polymermaterial besteht.

Als Behälter für die Lagerung von Flüssigkeiten, insbesondere für die Lagerung von Brennstoffen, die von einem von der jeweiligen Flüssigkeit getrennten Druckgas beaufschlagt werden, werden bevorzugt Membran-Tanks eingesetzt. Derartige Anwendungen kommen typischerweise in der Raumfahrt unter den Bedingungen der Schwerelosigkeit, aber auch unter Gravitation beispielsweise in schnell bzw. stark lageveränderlichen Systemen, wie Flugzeugen oder U-Booten, vor. Während die äußere Form solcher Tanks zumeist als Kugel ausgebildet ist, ist die innenliegende Membran in diesen Tanks in der Regel ein halbkugelförmiger Körper, der an seinem Rand äquatorial einspannt ist.

Die in derartigen Tanks verwendeten Membranen bestehen zumeist aus chemisch kompatiblem Elastomer-Material. Dieses muss ohne Relaxation, also ohne den Verlust seiner elastischen Eigenschaft, dauerhaft leckdicht in der äquatorialen Einspannung gehalten werden. Der Hauptteil des Tankvolumens innerhalb des Halbkugel-Volumens der Membran ist flüssigkeitsgefüllt, während ein kleiner Teil des Tankvolumens, und zwar derjenige außerhalb der Membran, mit dem Druckgas beaufschlagt wird.

Für eine Flüssigkeits-Entnahme, d.h. für die Entleerung des Tanks, wird ein erhöhter Gasdruck zum Austreiben der Flüssigkeit gegen den systembedingten Fliesswiderstand sowie gegen einen Innendruck benötigt. Hierfür sorgt ein Druckreservoir auf der Druckgas-Seite, das entweder innerhalb oder außerhalb des Tanks angeordnet sein kann. Der erforderliche Tankdruck kann entweder im Entspannungs-Modus, dem sogenannten "blow-down"-Modus entnommen werden, oder aber im Falle eines externen Gastanks über einen Konstantdruck-Regler.

Mit zunehmender Entnahme von Flüssigkeit findet ein Durchstülp-Vorgang der Membran durch ihre äquatoriale Ebene bis hin zur Totalentleerung des gesamten Tankvolumens statt. Im Gegensatz zu plastischen Polymer-Membranen überstehen Elastomer-Membranen solche Stülp-Vorgänge ohne das Auftreten von Rissen und von dadurch verursachten Lecks. Für die Anwendung von Membran-Tanks mit den in der Raumfahrt genutzten chemisch stark aggressiven Flüssigkeiten, wie den Oxidator-Typen auf Stickstoff-Dioxid-Basis, sind allerdings elastomere Membran-Materialien mit hinreichender Kompatibilität nicht verfügbar. Vielmehr gehören alle für diese Oxidator-Typen geeigneten chemisch kompatiblen Kunststoff- Membranen der Stoffklasse der Perfluor-Polymere an. So ist bereits aus der DE 198 10 638 C1 ein Behälter zur getrennten Aufnahme eines flüssigen Mediums sowie eines gasförmigen Mediums als Fördergas bekannt geworden, der insbesondere als Tank zur Lagerung von Treibstoffen und Oxydatoren für den Betrieb von Triebwerken in Raumflugkörpern dient und bei dem eine den Tankinnenraum in Teilräume unterteilende membranförmige Trennwand aus einer halbkugelförmigen Polymermembran besteht.

Polymermembranen sind plastischer Natur und als plastische Werkstoffe mangels eigener dauerhaft stabiler Rückstellkraft somit eigentlich nicht für eine direkte Einspannung geeignet. Die bei der Anwendung plastischer Polymerwerkstoffe auftretenden mechanischen Probleme sind die folgenden:
1.) Rißbildung während des Stülpvorganges,
2.) Permeation und Leckage durch Poren, insbesondere bei dünnwandigen Materialien,
3.) Kriechen unter dem Einfluss von Druckkräften mit der Folge einer dauerhaft nicht sicheren Befestigung und lediglich vorübergehender Dichtigkeit der Membran-Einspannung.

Während die ersten beiden Probleme bei den bekannten und heute im Einsatz befindlichen Tanks als bereits gelöst angesehen werden können, konnte das Problem des Kriechens an der Einspannung bisher noch nicht zufriedenstellend gelöst werden. Während elastische Membranwerkstoffe in einer metallischen Umgebung aufgrund ihrer elastischen Rückstellkräfte durch eine Klemmung fixiert und gedichtet werden können, ist für plastische Werkstoffe eine elastische Umgebung für die Klemm- und Dichtungsfunktion bisher nicht bekannt. Diese elastische Eigenschaft der klemmenden Umgebung muss in der Lage sein, das Kriechen eines plastischen Polymer-Materials und damit eine mechanische Lockerung sowie einen möglichen Verlust an Dichtigkeit auszugleichen. Für die Klemm- und Dicht-Eigenschaften langfristig, also für den gesamten Zeitraum einer Mission oder einer sonstigen Anwendung, ist es entscheidend, dass sich am Ende des Kriechen des Polymers ein stabiles Kräftegleichgewicht zwischen den Federungskräften der Klemmung und den wirkenden Rückstellkräften einstellt. Dies muss vor allem auch unter dem Einfluss einer chemisch aggressiven Umgebung und insbesondere bei einem Quellen durch die Einwirkung von Treibstoffen, bei gleichzeitig auftretenden Wechselbelastungen aufgrund positiver und negativer Temperaturänderungen sowie bei Veränderungen des Tankdrucks, die Einfluss auf die Spannung der Einklemmung nehmen können, gewährleistet sein.

Aufgabe der Erfindung ist es, einen Treibstofftank der eingangs genannten Art derart auszubilden, dass auch bei Verwendung einer Polymermembran keine durch ein Kriechen der Membran verursachten mechanischen Probleme auftreten.

Die Erfindung löst diese Aufgabe indem sie vorsieht, dass die Membran mittels eines Federringes, dessen Querschnitt die Form eines "C" aufweist, in einer Ausnehmung der Außenwand des Tanks als Gegenlager dichtend gehaltert ist.

Ferner wird vorgeschlagen, dass die Membran im Haltebereich einen Umschlingungswinkel von mindestens 180 Grad am Federring aufweist.

In vorteilhafter Weiterbildung des erfindungsgemäßen Tanks ist vorgesehen, dass die Federkonstante und der Durchmesser des Federringes in Anpassung an die bleibende Verformung des Polymermaterials der Membran bemessen sind.

Die Legierung, aus der der erfindungsgemäß vorgesehene Ring besteht, ist dabei vorteilhafterweise so gewählt, dass der Ring mit dem Tankinhalt chemisch absolut kompatibel ist. Die Materialauswahl orientiert sich hier an der Liste auf Kompatibilität mit dem jeweils verwendeteten Treibstoff oder Oxidator getesteter Metalle.

Um ein Herausrutschen der Membran aus dieser Kammer infolge mechanischer Belastung zu verhindern, ist vorgesehen, dass die Oberfläche des Federringes aufgeraut ist.

Alternativ wird vorgeschlagen, dass der Federring mit einer Beschichtung auf Basis der kompatiblen Perfluor-Kunststoffe versehen und fest mit der Membran durch Verkleben bzw. Vulkanisierung vorhanden ist.

Die Erfindung bietet den Vorteil, dass aufgrund sehr hoher chemischer Kompatibilität der Trennmembran ein universelles Tank-Design mit einer Eignung sowohl für Brennstoffe als auch für die typischerweise in Zweistoff-Antriebssystemen verwendeten stickstoffdioxid-basierten Oxidatoren, aber auch für diverse andere aggressive Flüssigkeiten bereitgestellt wird.

Nachfolgend wird eine erfindungsgemäße Anordnung anhand eines schematisch dargestellten Ausführungsbeispiels näher erläutert.

In einer teilweise geschnittenen Darstellung ist eine Tankwand 1 mit einer durch einen Federring 2, der einen Querschnitt in Form eines "C" aufweist, in einer korrespondierenden Ausnehmung 4 einer Tankwand 1 eingeklemmten Polymer-Membran 3 dargestellt.

Da ein plastischer Polymerkörper aufgrund seiner natürlichen Materialeigenschaften nicht in einer starren Umgebung, z.B. aus Metall eingeklemmt werden kann, ohne dass im Laufe der Zeit diese Klemmverbindung aufgrund von Kriechvorgängen locker und undicht wird, ist , wie dargestellt, die plastische Polymer-Membran 3, die keine eigene Rückstellkraft aufweist, mittels des Federringes 2 unter Bildung einer Federspannung in der Ausnehmung 4 der Tankwand 1 festgeklemmt.

Die Auslegung aller sowohl an der Klemmung wie auch an der Haftreibung beteiligten Kräfte sorgt für eine bleibende Haltekraft und Dichtheit.

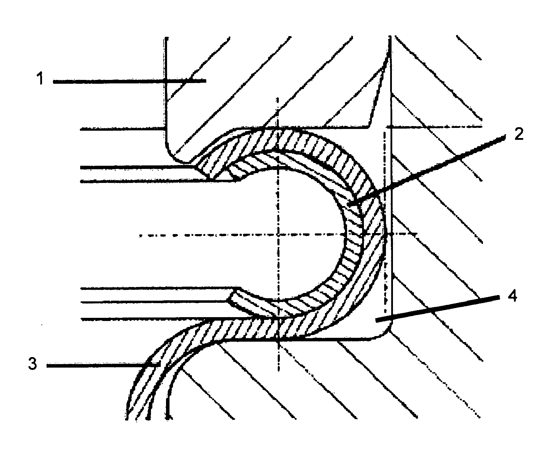

## Patentansprüche

1. Treibstofftank für die Lagerung von Flüssigkeiten, die durch ein Druckgas aus dem Tank ausgetrieben werden, insbesondere für den Einsatz in Raumfahrzeugen, der als Membran-Tank aufgebaut ist und bei dem die Membran aus einem Polymermaterial besteht, **dadurch gekennzeichnet, dass** die Membran (3) mittels eines Federringes (2), dessen Querschnitt die Form eines "C" aufweist, in einer Ausnehmung (4) der Außenwand (1) des Tanks als Gegenlager dichtend gehaltert ist.

2. Treibstofftank nach Anspruch 1, **dadurch gekennzeichnet, dass** die Membran (3) im Haltebereich einen Umschlingungswinkel von mindestens 180 Grad am Federring (2) aufweist.

3. Treibstofftank nach Anspruch 1 oder 2, **dadurch gekennzeichnet, dass** die Federkonstante und der Durchmesser des Federringes (2) in Anpassung an die bleibende Verformung des Polymermaterials der Membran bemessen sind.

4. Treibstofftank nach einem der Ansprüche 1 bis 3, **dadurch gekennzeichnet, dass** der Ring (2) aus mit dem jeweils verwendeten Treibstoff oder Oxidator kompatiblen Metall besteht.

5. Treibstofftank nach einem der Ansprüche 1 bis 4, **dadurch gekennzeichnet, dass** die Oberfläche des Federringes (2) aufgerauht ist.

6. Treibstofftank nach einem der Ansprüche 1 bis 4, **dadurch gekennzeichnet, dass** der Federring (2) mit einer Beschichtung versehen und durch Verkleben fest mit der Membran verbunden ist.

## Claims

1. A fuel tank for storing liquids which are expelled from the tank by a compressed gas, in particular for use in spacecraft, which is constructed as a diaphragm tank and in which the diaphragm is made from a polymer material, **characterised in that** the diaphragm (3) is held in sealing manner in a recess (4) in the outer wall (1) of the tank as a counter bearing by means of a spring ring (2), whereof the cross-section is in the form of a "C".

2. A fuel tank according to Claim 1, **characterised in that**, in the holding region, the diaphragm (3) has a wrap angle of at least 180 degrees against the spring ring (2).

3. A fuel tank according to Claim 1 or 2, **characterised in that** the spring constant and the diameter of the spring ring (2) are dimensioned in line with the permanent deformation of the polymer material of the diaphragm.

4. A fuel tank according to one of Claims 1 to 3, **characterised in that** the ring (2) is made from metal which is compatible with the fuel or oxidant used in each case.

5. A fuel tank according to one of Claims 1 to 4, **characterised in that** the surface of the spring ring (2) is roughened.

6. A fuel tank according to one of Claims 1 to 4, **characterised in that** the spring ring (2) is provided with a coating and is fixedly connected to the diaphragm by adhesion.

## Revendications

1. Réservoir de carburant pour le stockage de liquides devant être expulsés du réservoir, en particulier pour la mise en oeuvre dans des engins spatiaux, lequel réservoir est réalisé en tant que réservoir à membrane, la membrane étant réalisée en matériau polymère,
**caractérisé en ce que**
la membrane (3) est maintenue dans un évidement (4) de la paroi extérieure (1) du réservoir, de manière étanche, au moyen d'une bague élastique (2) servant de contre-support, dont la section transversale présente la forme d'un « C ».

2. Réservoir de carburant selon la revendication 1, **caractérisé en ce que** la membrane (3) présente, dans la zone de fixation, un angle d'enroulement d'au moins 180 ° avec la bague élastique (2).

3. Réservoir de carburant selon revendication 1 ou 2, **caractérisé en ce que** la constante élastique et le diamètre de la bague élastique (2) sont dimensionnés en fonction de la déformation permanente du matériau polymère de la membrane.

4. Réservoir de carburant selon l'une des revendications 1 à 3, **caractérisé en ce que** la bague (2) consiste en un métal qui est compatible avec le carburant ou l'oxydant chaque fois utilisé.

5. Réservoir de carburant selon l'une des revendications 1 à 4, **caractérisé en ce que** la surface de la bague élastique (2) est grattée.

6. Réservoir de carburant selon l'une des revendications 1 à 4, **caractérisé en ce que** la bague élastique (2) est pourvue d'un revêtement et est reliée fixement à la membrane par collage.
